# EUROPEAN PATENT APPLICATION

(11) **EP 4 679 523 A1**
(43) Date of publication of application: **14.01.2026**
(21) Application number: 24771054.4
(22) Date of filing: 25.01.2024
(51) Int. Cl.: H01M 4/36, H01M 4/48, H01M 4/38, H01M 10/052, H01M 4/02

(54) **NEGATIVE ELECTRODE MATERIAL FOR SECONDARY BATTERY**

(30) Priority: 10.03.2023 KR 20230031667
(71) Applicant: POSCO Silicon Solution Co., Ltd, Sejong-si 30011 (KR)
(72) Inventor: CHOI, Sun-Ho, Sejong 30011 (KR); LEE, Jae-Woo, Sejong 30152 (KR); CHO, Moon-Kyu, Sejong 30011 (KR); PARK, Jin-Gee, Daegu 42287 (KR); CHEON, Jung-Hoon, Sejong 30153 (KR)
(74) Representative: Nederlandsch Octrooibureau
(86) International application number: PCT/KR2024/001211
(87) International publication number: WO 2024/191053

(57) **Abstract**

The present invention relates to a negative electrode material for a secondary battery, having excellent initial charge/discharge efficiency, and, specifically, the negative electrode material for a secondary battery comprises: a matrix containing a silicon oxide, a composite oxide of silicon and at least one doping element selected from the group consisting of an alkali metal, an alkaline earth metal and a post-transition metal, or a mixture thereof; and silicon nanocrystals dispersed and incorporated in the matrix, and comprises, in an X-ray diffraction pattern using CuKα rays, a first peak of diffraction angle 2θ in the range of 20.3°-21.3°, a second peak in the range of 26°-27°, a third peak in the range of 28°-29°, and a fourth peak in the range of 30.5°-31.5°, and the ratio (I₂/I₄) of the maximum intensity (I₂) of the second peak to the maximum intensity (I₄) of the fourth peak satisfies 1-20.

## Description

### Technical Field

The present disclosure relates to a negative electrode material for a secondary battery, and more specifically, to a negative electrode material for a secondary battery with significantly improved initial coulombic efficiency.

### Background Art

In various industrial fields such as electronic products, electric/hybrid vehicles, aerospace/drones, and the like, the demand for secondary batteries with high energy density and high power density as well as long-term usability, that is, long lifespan, continues to increase.

Generally, a rechargeable secondary battery may be comprised of a positive electrode, a negative electrode, an electrolyte, and a separator. Among these, a representative positive electrode material included in the positive electrode and commercially used may be graphite, but theoretical maximum capacity of the graphite may be only 372 mAh/g.

Accordingly, in order to implement high-energy density secondary batteries, researches are continuously being conducted to use chalcogen-based materials such as sulfur (maximum capacity 1,675 mAh/g) or the like, silicon-based materials such as silicon (maximum capacity 4,200 mAh/g), silicon oxide (maximum capacity 1,500 mAh/g), or the like, transition metal oxides, or the like, as negative electrode materials for a secondary battery, and among various materials, silicon-based negative electrode materials are receiving the most attention.

However, when using particulate silicon as a negative electrode material, there may be a problem that battery characteristics may rapidly deteriorate due to insulation, particle detachment, an increase in contact resistance, or the like, caused by large volume changes in silicon as charge/discharge cycling is repeated, and battery functions may be lost in less than 100 cycles. In silicon oxide, there may be a problem that lithium is lost due to irreversible products such as lithium silicate, lithium oxide, or the like, to decrease rapidly initial charge/discharge efficiency.

In order to solve the problems of these silicon-based negative electrode materials, technology for nano-forming silicon into a form of a wire or the like, and composite-forming the same with a carbon material, technology for doping silicon oxide with a different metal to form a composite oxide phase, or pre-lithiating silicon oxide, or the like has been proposed, but there may be still problems such as poor initial charge/discharge efficiency, cycle characteristics, high-rate characteristics, or the like, making commercialization difficult.

### Disclosure of Invention

### Technical Problem

A purpose of the present disclosure is to provide a silicon-based negative electrode material for a secondary battery having excellent battery capacity and significantly improved initial charge/discharge efficiency characteristics.

### Solution to Problem

According to an aspect of the present disclosure, a negative electrode material for a secondary battery includes a matrix containing a composite oxide of silicon oxide, a doping element selected from the group of an alkali metal, an alkaline earth metal, and a post-transition metal, and silicon, or a mixture thereof; and silicon nanocrystals dispersed and incorporated in the matrix; and includes, in an X-ray diffraction pattern using CuKα rays, a first peak in which a diffraction angle 2θ is located in a range of 20.3° to 21.3°, a second peak in which a diffraction angle 2θ is located in a range of 26° to 27°, a third peak in which a diffraction angle 2θ is located in a range of 28° to 29°, and a fourth peak in which a diffraction angle 2θ is located in a range of 30.5° to 31.5°, wherein an intensity ratio (I₂/I₄) between a maximum intensity (I₂) of the second peak and a maximum intensity (I₄) of the fourth peak satisfies 1 to 20.

In the negative electrode material for a secondary battery according to an embodiment of the present disclosure, the fourth peak may be derived from magnesium silicate.

In the negative electrode material for a secondary battery according to an embodiment of the present disclosure, an intensity ratio (I₂/I₃) between the maximum intensity (I₂) of the second peak and a maximum intensity (I₃) of the third peak may be 0.2 to 5.0.

In the negative electrode material for a secondary battery according to an embodiment of the present disclosure, a full width at half maximum of the first peak or a full width at half maximum of the second peak in the X-ray diffraction pattern may be narrower than a full width at half maximum of the third peak.

In the negative electrode material for a secondary battery according to an embodiment of the present disclosure, the negative electrode material for a secondary battery may include the alkali metal and the alkaline earth metal.

In the negative electrode material for a secondary battery according to an embodiment of the present disclosure, the negative electrode material for a secondary battery may include 3 to 15 wt% of the alkaline earth metal, based on a total weight of the negative electrode material.

In the negative electrode material for a secondary battery according to an embodiment of the present disclosure, a weight ratio of the alkali metal:alkaline earth metal included in the negative electrode material for a secondary battery may be 1:1 to 100.

In the negative electrode material for a secondary battery according to an embodiment of the present disclosure, a weight ratio of the alkali metal:alkaline earth metal included in the negative electrode material for a secondary battery may be 1:1 to 15.

In the negative electrode material for a secondary battery according to an embodiment of the present disclosure, the alkali metal may be lithium (Li), and the alkaline earth metal may be magnesium (Mg).

In the negative electrode material for a secondary battery according to an embodiment of the present disclosure, an average diameter of the silicon nanocrystals may be 2 to 30 nm.

In the negative electrode material for a secondary battery according to an embodiment of the present disclosure, the negative electrode material may further include a coating layer containing carbon.

The present disclosure may include a secondary battery including the negative electrode material for a secondary battery described above, according to another aspect.

### Advantageous Effects of Invention

A negative electrode material for a secondary battery according to the present disclosure may include a matrix containing a composite oxide of silicon oxide, a doping element selected from the group of an alkali metal, an alkaline earth metal, and a post-transition metal, and silicon, or a mixture thereof; and silicon nanocrystals dispersed and incorporated in the matrix;, and may satisfy specific crystallographic characteristics based on an X-ray diffraction pattern using CuKα rays, to have an advantage of providing a secondary battery equipped with a silicon-based negative electrode material having excellent battery capacity and significantly improved initial charge/discharge efficiency characteristics.

### Brief Description of Drawings

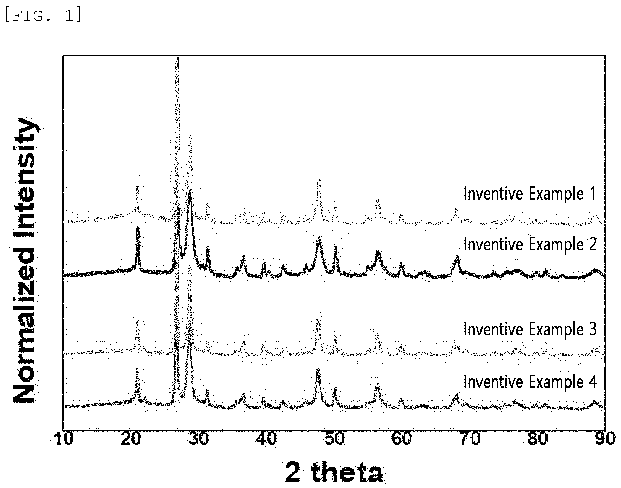

FIG. 1 is a view illustrating X-ray diffraction (XRD) patterns of Inventive Examples 1 to 4.

### Best Mode for the Invention

Hereinafter, a negative electrode material for a secondary battery of the present disclosure will be described in detail with reference to the attached drawings. Drawings to be introduced below may be provided as examples such that those skilled in the art may sufficiently convey the idea of the present disclosure. Therefore, the present disclosure is not limited to the drawings presented below, and may be embodied in other forms, and drawings to be presented below may be illustrated in an exaggerated manner to clarify the idea of the present disclosure. In this case, when there is no other definition in the technical and scientific terms used, they have a meaning commonly understood by a person having ordinary knowledge in the technical field to which the present disclosure belongs, and the description of well-known functions and configurations that may unnecessarily obscure the gist of the present disclosure in the following description and the attached drawings will be omitted.

In addition, a singular form used in the specification and the attached claims may be intended to include a plural form as well, unless specifically indicated in the context.

In the present specification and the attached claims, the terms first, second, or the like may not be used in a limited sense but may be used for the purpose of distinguishing one component from another component.

In the present specification and the appended claims, the terms "include," "comprise," or "have" mean that a feature or component described in the specification exists, and unless specifically limited, do not preclude possibility that one or more other features or components are added.

In the present specification and the appended claims, when a portion such as a film (layer), a region, a component, or the like is said to be on or above another portion, it may include not only a case in which it is directly above and in contact with a different portion, but also a case in which a different film (layer), a different region, a different component, or the like is interposed therebetween.

In the present disclosure, a matrix may mean a solid medium in which nanocrystal silicon are dispersed, and may mean a material that forms a continuum phase relative to silicon nanocrystals, which may be a dispersed phase in a negative electrode material. In the present disclosure, a matrix may mean a material(s), excluding metal silicon (Si), in a negative electrode material.

In the present disclosure, a nanocrystal may mean a crystal having a size (diameter) of 10⁰ to 10² nanometer order, which may be generally defined as the nanocrystal, a diameter of substantially 500 nm or less, specifically 200 nm or less, more specifically 100 nm or less, and even more specifically 50 nm or less.

In the present disclosure, a negative electrode material for a secondary battery may include, but is not necessarily limited to, a negative electrode material for a lithium secondary battery. The negative electrode material of the present disclosure may be utilized as an active material for a secondary battery such as a sodium battery, an aluminum battery, a magnesium battery, a calcium battery, a zinc battery, or the like, and may also be utilized in other energy storage/generation devices in which conventional silicon-based materials are used, such as a supercapacitor, a dye-sensitized solar cell, a fuel cell, or the like.

According to an aspect of the present disclosure, a negative electrode material for a secondary battery may include a matrix containing a composite oxide of silicon oxide, a doping element selected from the group of an alkali metal, an alkaline earth metal, and a post-transition metal, and silicon, or a mixture thereof; and silicon nanocrystals dispersed and incorporated in the matrix; and may include, in an X-ray diffraction pattern using CuKα rays, a first peak in which a diffraction angle 2θ is located in a range of 20.3° to 21.3°, a second peak in which a diffraction angle 2θ is located in a range of 26° to 27°, a third peak in which a diffraction angle 2θ is located in a range of 28° to 29°, and a fourth peak in which a diffraction angle 2θ is located in a range of 30.5° to 31.5°, wherein an intensity ratio (I₂/I₄) between a maximum intensity (I₂) of the second peak and a maximum intensity (I₄) of the fourth peak may satisfy 1 to 20.

In a secondary battery using a negative electrode material including conventional silicon oxide, lithium and the silicon oxide may be reacted during initial charge to generate lithium silicide and lithium oxide, but since the lithium oxide does not participate in an electrochemical reaction after the generation, an irreversible reaction in which some of lithium moved to a negative electrode during the initial charge does not return to a positive electrode during discharge may occur. In the silicon oxide, this irreversible capacity may be large, as compared to other silicon-based negative electrodes, and initial charge/discharge efficiency (ICE), which may be defined as a ratio of discharge capacity relative to initial charge capacity, may be at about 70%, and may be thus very low. Since this low initial charge/discharge efficiency requires excessive capacity of a positive electrode in configuring a secondary battery, there may be a problem of compensating for capacity per unit mass of the negative electrode.

According to an embodiment of the present disclosure, a negative electrode material for a secondary battery may include a matrix containing a composite oxide of silicon oxide, a doping element selected from the group of an alkali metal, an alkaline earth metal, and a post-transition metal, and silicon, or a mixture thereof; and silicon nanocrystals dispersed and incorporated in the matrix; and may satisfy specific crystallographic characteristics based on an X-ray diffraction pattern using CuKα rays. Therefore, since an inactive phase inducing an irreversible reaction may be effectively removed, the secondary battery including the negative electrode material according to an embodiment of the present disclosure may have an advantage of having significantly improved initial charge/discharge efficiency, as compared to conventional batteries.

As an example, in an X-ray diffraction pattern using CuKα rays, the intensity ratio (I₂/I₄) between the maximum intensity (I₂) of the second peak in which a diffraction angle 2θ is located in a range of 26° to 27° and the maximum intensity (I₄) of the fourth peak in which a diffraction angle 2θ is located in a range of 30.5° to 31.5° may be 1 to 20, specifically 1.5 to 15, more specifically 1.5 to 13, even more specifically 2 to 12, and even more specifically 5 to 11.

Since the intensity ratio (I₂/I₄) between the maximum intensity (I₂) of the second peak and the maximum intensity (I₄) of the fourth peak, in the X-ray diffraction pattern of the negative electrode material for a secondary battery, may satisfy the aforementioned range, unlike conventional batteries, an irreversible reaction of lithium may be effectively suppressed, thereby significantly improving initial charge/discharge efficiency of the secondary battery.

As a specific example, in the X-ray diffraction pattern using CuKα rays, the intensity ratio (I₂/I₃) between the maximum intensity (I₂) of the second peak in which a diffraction angle 2θ is located in a range of 26° to 27° and the maximum intensity (I₃) of the third peak in which a diffraction angle 2θ is located in a range of 28° to 29° may be 0.2 to 5.0, specifically 0.5 to 5.0, more specifically 0.5 to 4.0, even more specifically 0.5 to 2.5, and even more specifically 1.9 to 2.3.

In addition to the intensity ratio (I₂/I₄) between the maximum intensity (I₂) of the second peak and the maximum intensity (I₄) of the fourth peak, the intensity ratio (I₂/I₃) between the maximum intensity (I₂) of the second peak and the maximum intensity (I₃) of the third peak may satisfy the above range, thereby improving initial charge/discharge efficiency of the secondary battery and allowing the secondary battery to have excellent capacity retention rate characteristics.

For example, a capacity retention rate of the secondary battery may be 80% or more, 85% or more, 90% or more, or 93% or more, and preferably 95% or more, 96% or more, 97% or more, 98% or more, or 99% or more, and an upper limit thereof is not limited, but may be less than or equal to 100%.

In this case, the capacity retention rate may be calculated based on discharge capacity (C₅₀) in a 50^{th} charge/discharge cycle relative to discharge capacity (C₁) in a 1^{st} charge/discharge cycle performed after a formation process.

For example, the formation process may include a first process in which charge/discharge is performed under conditions of a CC/CV, a cut-off voltage of 0.005 V to 1.5 V, and a 0.1 C-rate, and a second process in which charge/discharge is performed under conditions of a CC/CV, a cut-off voltage of 0.005 V to 1.0 V, and a 0.1 C-rate. However, it should be understood that the present disclosure is not limited by the formation process conditions, and a formation process typically performed in a battery used to test electrochemical properties of a conventional negative electrode material may be sufficient.

In addition, a full width at half maximum (FWHM) of the first peak or a full width at half maximum (FWHM) of the second peak in the X-ray diffraction pattern using CuKα rays may be narrower than a full width at half maximum (FWHM) of the third peak.

In this case, the first peak and the second peak may be derived from quartz, and the third peak may be derived from crystalline silicon.

In an embodiment, the fourth peak having a diffraction angle 2θ of 30.5° to 31.5° in the X-ray diffraction pattern using CuKα rays may be derived from magnesium silicate.

In this case, the magnesium silicate may be at least one selected from MgSiO₃ and Mg₂SiO₄.

As described above, a negative electrode material according to an embodiment of the present disclosure may include specific crystallographic characteristics based on an X-ray diffraction pattern using CuKα rays, and may thus effectively remove an inactive phase inducing an irreversible reaction included in the negative electrode material, such that lithium moved to a negative electrode during initial charging may return to a positive electrode during discharge, thereby significantly improving the initial charge/discharge efficiency and simultaneously having excellent capacity retention rate.

For example, a negative electrode material for a secondary battery of the present disclosure may include at least one doping element selected from the group of an alkali metal, an alkaline earth metal, and a post-transition metal.

In a specific example, the doping element may include at least one alkali metal selected from lithium (Li), sodium (Na), potassium (K), rubidium (Rb), and cesium (Cs), and at least one alkaline earth metal selected from beryllium (Be), magnesium (Mg), calcium (Ca), strontium (Sr), and barium (Ba) .

To improve initial charge/discharge efficiency of secondary batteries in the art, a silicon-based negative electrode material or a silicon oxide-based negative electrode material containing an alkaline earth metal such as magnesium (Mg) or calcium (Ca) as doping elements may be provided, and to improve the initial charge/discharge efficiency, an amount of the doped alkaline earth metal should be increased. A secondary battery to which a negative electrode material with an increased amount of alkaline earth metal is applied may have improved initial charge/discharge efficiency, but there may be a problem that discharge capacity and cycle life characteristics of the secondary battery may be rapidly reduced due to the increased amount of alkaline earth metal.

A negative electrode material according to an embodiment may include an alkali metal together with an alkaline earth metal to improve initial charge/discharge efficiency while minimizing a decrease in discharge capacity and cycle life characteristics of a secondary battery.

As a preferred example, the alkali metal may be lithium (Li), and the alkaline earth metal may be magnesium (Mg).

Since lithium (Li) and magnesium (Mg) may be simultaneously included as doping elements in the negative electrode material, an amount of alkaline earth metal included as doping elements may be reduced compared to the conventional one, to improve the initial charge/discharge efficiency, but an inactive phase inducing an irreversible reaction included in the negative electrode material may be effectively removed. Therefore, to improve initial charge/discharge efficiency without deteriorating discharge capacity and cycle life characteristics of the secondary battery, it is preferable to include lithium (Li) and magnesium (Mg) as doping elements in the negative electrode material.

In a specific example, the negative electrode material for a secondary battery may include 3 to 15 wt%, specifically 3 to 10 wt%, and more specifically 3 to 5 wt% of the alkaline earth metal, based on the total weight of the negative electrode material.

When the amount of the alkaline earth metal included in the negative electrode material for a secondary battery exceeds 15 wt%, initial charge/discharge efficiency of the secondary battery may be improved, but discharge capacity and/or cycle life characteristics of the secondary battery may be reduced, and when the amount of the alkaline earth metal included in the negative electrode material is less than 3 wt%, improvement in initial charge/discharge efficiency of the secondary battery may be limited. Therefore, it is preferable that the negative electrode material for a secondary battery include the alkaline earth metal in the aforementioned range.

In an embodiment, a weight ratio of the alkali metal:alkaline earth metal included in the negative electrode material for a secondary battery may be 1:1 to 100, specifically 1:1 to 50, and more specifically 1:1 to 40.

As an advantageous example, the weight ratio of alkali metal:alkaline earth metal may be 1:1 to 35, 1:1 to 30, 1:8 to 30, 1:1 to 25, 1:8 to 25, 1:1 to 20, 1:8 to 20, 1:1 to 15, or 1:8 to 15.

When the weight ratio of alkali metal:alkaline earth metal included in the negative electrode material for a secondary battery is out of the aforementioned range, i.e., when the alkali metal is included in a larger amount than the alkaline earth metal, an inactive phase inducing an irreversible reaction caused by the alkali metal may be formed, which may lower initial charge/discharge efficiency of the secondary battery, and when the alkaline earth metal is included in a larger amount than the alkali metal beyond the aforementioned range, discharge capacity and/or cycle life characteristics of the secondary battery may be lowered. Therefore, it may be advantageous for the weight ratio of alkali metal:alkaline earth metal included in the negative electrode material for a secondary battery to satisfy the aforementioned range.

In a specific example, the negative electrode material for a secondary battery may include 0.01 to 10 wt%, specifically 0.1 to 5 wt%, more specifically 0.15 to 1.5 wt%, and even more specifically 0.15 to 0.8 wt% of the alkali metal based on the total weight of the negative electrode material.

In a specific example, an average diameter of silicon nanocrystals may be, but is not limited to, 10⁰ to 10¹ nanometer order, specifically 1 to 50 nm, 2 to 40 nm, 2 to 35 nm, 2 to 30 nm, 2 to 20 nm, or 2 to 15 nm.

Experimentally, the average diameter of the silicon nanocrystals may be calculated by measuring sizes of the silicon nanocrystals in the negative electrode material through a transmission electron microscope observation image, and averaging sizes measured for 10 or more, 20 or more, or 30 or more silicon nanocrystals.

In a specific example, the negative electrode material may be in a particle phase. The negative electrode material in a particle phase may have a particle size typically required for use in a secondary battery, for example, an average diameter of an order of 10⁰ µm to 10¹ µm, specifically, an average diameter of a level of 1 µm to 99 µm, 1 µm to 90 µm, 1 µm to 80 µm, 1 µm to 70 µm, 1 µm to 60 µm, 1 µm to 50 µm, 1 µm to 40 µm, 1 µm to 30 µm, or 5 µm to 30 µm, but may not be limited thereto.

In a specific example, the negative electrode material may further include a coating layer containing carbon, specifically, a surface coating layer coated on a surface of the negative electrode material. It is advantageous in that the surface coating layer improves electrical characteristics of the negative electrode material. It is sufficient in that a thickness of the coating layer is on a level of 2 to 30 nm, but is not necessarily limited thereto.

The present disclosure may include a negative electrode containing the negative electrode material. The negative electrode may be a negative electrode of a secondary battery, specifically, a lithium secondary battery. The negative electrode may include a current collector; and a negative electrode active material layer located on at least one surface of the current collector and containing the negative electrode material, and the negative electrode active material layer may further include a binder and a conductive material, commonly used in the negative electrode material and the secondary battery negative electrode, as necessary.

The present disclosure may include a secondary battery including the negative electrode. Specifically, the present disclosure may include a lithium secondary battery including the negative electrode. The lithium secondary battery may include a positive electrode current collector; a positive electrode including a positive electrode active material layer located on at least one surface of the positive electrode current collector; the negative electrode described above, a separator interposed between the positive electrode and the negative electrode; and an electrolyte conducting lithium ions. The positive electrode current collector, the negative electrode current collector, a positive electrode active material or a composition of the positive electrode active material layer, the separator, a solvent or an electrolytic salt of the electrolyte, a concentration of the electrolytic salt, or the like may be any material or composition commonly used in a lithium secondary battery.

In an embodiment, initial charge/discharge efficiency of the lithium secondary battery may be 75% or more, 80% or more, 85% or more, 86% or more, 87% or more, and may be substantially 95% or less.

Hereinafter, a negative electrode material for a secondary battery according to the present disclosure will be described in more detail through examples. However, the following examples may be only a reference for explaining the present disclosure in detail, and the present disclosure is not limited thereto, and may be implemented in various forms.

In addition, unless otherwise defined, all technical and scientific terms have the same meaning as generally understood by one of ordinary skill in the art to which the present disclosure belongs. The terminology used in the description herein may be only for the purpose of effectively describing specific examples, and may not be intended to limit the present disclosure.

### Mode for the Invention

### (Inventive Example 1)

A mixed raw material in which raw materials of Si, SiO₂, MgO, and LiOH were mixed in a molar ratio of 40:31:6.7:2.4 in 20 L of ethanol was dried at 120°C for 24 hours.

26 kg of the mixed raw material was placed in a crucible in a vacuum chamber of 0.1 torr or less, heated to 1,400°C to vaporize, and then condensed on a collecting plate at 400°C to obtain a silicon oxide complexed with magnesium and lithium.

An obtained magnesium-lithium-silicon composite oxide was heat-treated in an inert atmosphere at 800°C or higher for 20 hours or longer.

After mechanically pulverizing the heat-treated magnesium-lithium-silicon composite oxide, a pulverized powder was coated with 5 wt% carbon through a CVD process at 950°C using hydrocarbon gas, to manufacture a negative electrode material.

In this case, it was confirmed that the negative electrode material included 5 wt% Mg and 0.1 wt% Li based on a total weight of the negative electrode material.

### (Inventive Example 2)

The present Inventive Example was performed in the same manner as Inventive Example 1, except that a mixing ratio of LiOH was changed such that 0.2 wt% of Li was included in the negative electrode material.

### (Inventive Example 3)

The present Inventive Example was performed in the same manner as Inventive Example 1, except that a mixing ratio of LiOH was changed such that 0.5 wt% of Li was included in the negative electrode material.

### (Inventive Example 4)

The present Inventive Example was performed in the same manner as Inventive Example 1, except that a mixing ratio of LiOH was changed such that 1 wt% of Li was included in the negative electrode material.

### (Inventive Example 5)

The present Inventive Example was performed in the same manner as Inventive Example 1, except that a mixing ratio of MgO was changed such that 7 wt% of Mg was included in the negative electrode material.

### (Inventive Example 6)

The present Inventive Example was performed in the same manner as Inventive Example 2, except that a mixing ratio of MgO was changed such that 7 wt% of Mg was included in the negative electrode material.

### (Inventive Example 7)

The present Inventive Example was performed in the same manner as Inventive Example 3, except that a mixing ratio of MgO was changed such that 7 wt% of Mg was included in the negative electrode material.

### (Inventive Example 8)

The present Inventive Example was performed in the same manner as Inventive Example 4, except that a mixing ratio of MgO was changed such that 7 wt% of Mg was included in the negative electrode material.

### (Comparative Example 1)

The present Comparative Example was performed in the same manner as Inventive Example 1, except that no LiOH raw material was used.

### (Comparative Example 2)

The present Comparative Example was performed in the same manner as Inventive Example 5, except that no LiOH raw material was used.

### (Comparative Example 3)

The present Comparative Example was performed in the same manner as Inventive Example 1, except that LiF was used instead of LiOH.

### (Experimental Example 1) X-ray Diffraction Analysis

A structure of a pulverized negative electrode material was confirmed through X-ray diffraction (XRD, Rigaku D/MAX-2500/PC, 40 kV, 15 mA, 4° min⁻¹, Cu-Kα radiation, λ = 0.15406 nm) analysis.

FIG. 1 is a view illustrating X-ray diffraction (XRD) patterns of Inventive Examples 1 to 4.

Referring to FIG. 1, it can be seen that Inventive Examples 1 to 4 all include a first peak in which a diffraction angle 2θ is located in a range of 20.3° to 21.3°, a second peak in which a diffraction angle 2θ is located in a range of 26° to 27°, a third peak in which a diffraction angle 2θ is located in a range of 28° to 29°, and a fourth peak in which a diffraction angle 2θ is located in a range of 30.5° to 31.5°.

In addition, it was confirmed that Inventive Examples 1 to 4 all include the fourth peak corresponding to magnesium silicate (MgSiO₃), and no peak related to mixed Li among raw materials was observed.

Although not shown in the drawing, Inventive Examples 5 to 8 were also observed to include all of the first to fourth peaks. On the other hand, in Comparative Examples 1 and 2, the first peak was not observed, and in Comparative Example 3, an MgSiO₃ peak corresponding to the fourth peak was not observed, and a LiF peak with a diffraction angle 2θ in the range of 38° to 41° was observed.

An intensity (I₂/I₄) between a maximum intensity (I₂) of the second peak and a maximum intensity (I₄) of the fourth peak and an intensity ratio (I₂/I₃) between the maximum intensity (I₂) of the second peak and a maximum intensity (I₃) of the third peak, calculated based on the XRD patterns observed in each of the negative electrode materials were summarized in Table 1 below.

### (Experimental Example 2) Battery Manufacturing and Battery Performance Evaluation

Final negative electrode powder particles were used as an active material, and the active material, a conductive material (carbon black), a carboxymethyl cellulose (CMC), and a styrene butadiene rubber (SBR) were mixed in a weight ratio of 8:1:0.5:0.5, applied to a copper foil having a thickness of 17 µm, and then dried at 90°C for 40 minutes. After performing the drying, the applied copper foil was punched out to have a 14 mm diameter, metal lithium of a 16 mm diameter was used as a counter electrode, and an electrolyte was filled with a separator of an 18 mm diameter interposed therebetween, to manufacture a CR2032 coin-type half-cell. The electrolyte was prepared by dissolving 1 M LiPF₆ in a solvent containing a 1:1 volume ratio of ethylene carbonate (EC)/diethyl carbonate (DEC), and using 3 wt% fluoroethylene carbonate (FEC) as an additive.

Afterwards, the manufactured battery was charged (lithiated) to 0.005 V with a constant current of 0.1 C, charged at a constant voltage of 0.005 V until it reached 0.01 C, and then discharged (delithiated) to 1.5 V with a constant current of 0.1 C (first formation operation), and was charged (lithiated) again to 0.005 V with a constant current of 0.1 C, charged at a constant voltage of 0.005 V until it reached 0.01 C, and then discharged (delithiated) to 1.0 V with a constant current of 0.1 C (second formation operation), to perform a formation process.

Initial charge/discharge efficiency was evaluated based on the charge/discharge in the first formation operation, and after the formation operation, 50 charge/discharge cycles were performed according to charge/discharge cycle conditions below. A capacity retention rate was calculated using the formula C₅₀/C₁*100 based on discharge capacity of a first cycle (C₁) and discharge capacity after 50 cycles (C₅₀). Results therefrom were summarized in Table 1 below.

Charge/discharge cycle conditions: Charge to 0.005 V with a constant current of 0.5 C (lithiation), charge at a constant voltage of 0.005 V until reaching 0.05 C, and then discharge to 1.0 V with a constant current of 0.5 C (delithiation)

**[Table 1]**

| | XRD Intensity Ratio | | Initial Charge/Discharge Efficiency | Capacity Retention Rate |
|---|---|---|---|---|
| | I₂/I₄ | I₂/I₃ | | |
| Inventive Example 1 | 11.8 | 1.8 | 85.3 | 92.4 |
| Inventive Example 2 | 10.3 | 2.1 | 85.5 | 99.8 |
| Inventive Example 3 | 7.9 | 2.0 | 85.7 | 99.5 |
| Inventive Example 4 | 7.9 | 2.8 | 86.4 | 91.2 |
| Inventive Example 5 | 1.6 | 0.5 | 86.2 | 92.1 |
| Inventive Example 6 | 1.6 | 0.5 | 86.3 | 94.3 |
| Inventive Example 7 | 12.2 | 2.4 | 87.9 | 89.7 |
| Inventive Example 8 | 13.3 | 3.8 | 88.7 | 81.6 |
| Comparative Example 1 | 1.2 | 0.4 | 80.7 | 92.3 |
| Comparative Example 2 | 0.9 | 0.3 | 81.8 | 90.5 |
| Comparative Example 3 | - | - | 91.0 | 32.2 |

Referring to Table 1, it was confirmed that the secondary batteries including the negative electrode materials of Inventive Examples 1 to 8 illustrated initial charge/discharge efficiencies of 85% or more, and in particular, it was confirmed that the negative electrode materials of Inventive Examples 2 and 3 illustrated excellent capacity retention rate characteristics of 99% or more, and initial charge/discharge efficiency was significantly improved to 85% or more.

On the other hand, in Comparative Examples 1 and 2, initial charge/discharge efficiency was observed to be about 81%, as similar to the conventional one, and in Comparative Example 3, initial charge/discharge efficiency was 91%, but a capacity retention rate was confirmed to be very poor at 32.2%.

As described above, the present disclosure has been described with specific matters and limited examples and drawings, but these may be provided only to help a more general understanding of the present disclosure, and the present disclosure may not be limited to the above-described examples, and those with ordinary knowledge in the field to which the present disclosure pertains may make various modifications and variations from this description.

Therefore, the spirit of the present disclosure should not be limited to the described examples, and not only the scope of the claims described below, but also all things that may be equivalent or equivalent to the scope of the claims may be considered to belong to the scope of the spirit of the present disclosure.

## Claims

1. A negative electrode material for a secondary battery, comprising:
a matrix containing a composite oxide of silicon oxide, a doping element selected from the group of an alkali metal, an alkaline earth metal, and a post-transition metal, and silicon, or a mixture thereof; and silicon nanocrystals dispersed and incorporated in the matrix; and
in an X-ray diffraction pattern using CuKα rays, a first peak in which a diffraction angle 2θ is located in a range of 20.3° to 21.3°, a second peak in which a diffraction angle 2θ is located in a range of 26° to 27°, a third peak in which a diffraction angle 2θ is located in a range of 28° to 29°, and a fourth peak in which a diffraction angle 2θ is located in a range of 30.5° to 31.5°,
wherein an intensity ratio (I₂/I₄) between a maximum intensity (I₂) of the second peak and a maximum intensity (I₄) of the fourth peak is 1 to 20.

2. The negative electrode material of claim 1, wherein the fourth peak is derived from magnesium silicate.

3. The negative electrode material of claim 1, wherein an intensity ratio (I₂/I₃) between the maximum intensity (I₂) of the second peak and a maximum intensity (I₃) of the third peak is 0.2 to 5.0.

4. The negative electrode material of claim 1, wherein a full width at half maximum of the first peak or a full width at half maximum of the second peak in the X-ray diffraction pattern is narrower than a full width at half maximum of the third peak.

5. The negative electrode material of claim 1, wherein the negative electrode material includes the alkali metal and the alkaline earth metal.

6. The negative electrode material of claim 5, wherein the negative electrode material includes 3 to 15 wt% of the alkaline earth metal, based on a total weight of the negative electrode material.

7. The negative electrode material of claim 5, wherein a weight ratio of the alkali metal:alkaline earth metal included in the negative electrode material is 1:1 to 100.

8. The negative electrode material of claim 7, wherein the weight ratio of the alkali metal:alkaline earth metal included in the negative electrode material is 1:1 to 15.

9. The negative electrode material of claim 5, wherein the alkali metal is lithium (Li), and the alkaline earth metal is magnesium (Mg).

10. The negative electrode material of claim 1, wherein an average diameter of the silicon nanocrystals is 2 to 30 nm.

11. The negative electrode material of claim 1, further including a coating layer containing carbon.

12. A secondary battery comprising the negative electrode material according to any one of claims 1 to 11.
